# EUROPÄISCHE PATENTANMELDUNG

(11) **EP 1 022 542 A1**
(43) Veröffentlichungstag der Anmeldung: **26.07.2000**
(21) Anmeldenummer: 99125708.0
(22) Anmeldetag: 23.12.1999
(51) Int. Cl.: G01C 15/02, G01C 15/00, G01C 15/10

(54) **Markierwerkzeug**

(30) Priorität: 20.01.1999 DE 19902075
(71) Anmelder: ROBERT BOSCH GMBH, 70442 Stuttgart (DE)
(72) Erfinder: Skultety-Betz, Uwe, 70771 Leinfelden-Echterdingen (DE)

(57) **Zusammenfassung**

Es wird ein Markierwerkzeug mit einem Mittel zum Anbringen einer Markierung an einer Oberfläche (9) vorgeschlagen, bei dem das Mittel mit einem lichtempfindlichen Element (4) zu einer Einheit verbunden ist, wobei das Markierwerkzeug eine Steuereinrichtung umfaßt, die mit dem lichtempfindlichen Element (4) und dem Mittel zum Anbringen einer Markierung in funktioneller Beziehung steht, um letzteres zu betätigen, wenn das lichtempfindliche Element (4) einen Lichtstrahl (6) erfaßt.

## Beschreibung

Die Erfindung betrifft ein Markierwerkzeug zum Auftragen von Markierungen auf Oberflächen, insbesondere von Positionsmarkierungen an zu bearbeitenden Wänden oder Decken von Gebäuden.

Es sind zahlreiche Vorrichtungen und Verfahren zum Projizieren von Lichtmarkierungen, insbesondere mit Hilfe von Lasern, bekannt. Als Beispiel kann hier US-A-4,448,528 genannt werden, die eine Vorrichtung beschreibt, mit deren Hilfe eine an einem Fußboden eines Raums vermessene Position exakt lotrecht an eine darüber liegende Decke projiziert werden kann. Eine in dieser Weise projizierte Markierung ist aber nicht direkt als Referenz für eine Bearbeitung der betreffenden Oberfläche brauchbar, denn es ist zumeist nicht möglich, ein Bearbeitungswerkzeug entsprechend der projizierten Marke zu positionieren, ohne gleichzeitig den Projektionsstrahl zu verdecken. Um eine dauerhafte Markierung anzubringen, wird deshalb meist ein Stift benutzt, um an der Stelle der projizierten Marke eine Farbmarkierung anzubringen, oder die Spitze eines schmalen Gegenstands wie etwa eines Nagels wird auf die projizierte Marke gehalten und mit einem Hammer eingeschlagen, um eine Markierung in Form eines kleinen Lochs zu erhalten.

Diese Vorgehensweise liefert häufig ungenaue Ergebnisse, da eine Person, die die Markierung anbringt, den verwendeten Stift beziehungsweise die Spitze nur unter einem Winkel zum Projektionsstrahl sehen kann, um diesen nicht zu verdecken, so daß leicht Parallaxenfehler auftreten können. Außerdem sind die zu markierenden Stellen, inbesondere an Decken hoher Räume, nur unter Schwierigkeiten zu erreichen, was sich selbstverständlich auf die Kosten der auszuführenden Arbeiten auswirkt.

### Vorteile der Erfindung

Gemäß der Erfindung wird vorgeschlagen, ein Mittel zum Anbringen einer Markierung an einer Oberfläche, wie zum Beispiel insbesondere eine Schreibspitze, mit einem lichtempfindlichen Element zu einem einheitlichen Markierwerkzeug zusammenzufassen, wobei das Markierwerkzeug ferner eine Steuereinrichtung umfaßt, die mit dem lichtempfindlichen Element und dem Mittel zum Anbringen einer Markierung in funktioneller Beziehung steht, um letzteres zu betätigen, wenn das lichtempfindliche Element ein Lichtsignal erfaßt. Anders als bei der herkömmlichen Anbringung von Markierungen mit Hilfe eines Stifts oder mit Hammer und Nagel genügt es hier, das Markierwerkzeug gegen die zu markierende Oberfläche zu halten und es die Markierung selbsttätig setzen zu lassen, wenn es von dem projizierten Strahl getroffen wird.

Vorzugsweise ist die Schreibspitze durch eine Düse gebildet, die von der Steuereinrichtung zum Abgeben von Farbpulver oder Tinte steuerbar ist, um so die Markierung auf der Oberfläche aufzutragen.

Das lichtempfindliche Element ist vorzugsweise eine ortsauflösende Anordnung einzelner Lichtsensoren, insbesondere eine lineare Anordnung von Lichtsensoren, wie etwa Photodioden, und die Steuereinrichtung ist eingerichtet, um das Mittel zum Anbringen einer Markierung so zu steuern, daß es die Markierung an einer Stelle der Oberfläche setzt, die einem Ort entspricht, wo das lichtempfindliche Element den projizierten Lichtstrahl erfaßt. Eine derartige ausgedehnte Anordnung von Lichtsensoren ist offensichtlich leichter in einem projizierten Strahl zu positionieren als ein Einzelsensor. Die Steuerung durch die Steuerschaltung erfolgt dabei in Abhängigkeit von den geometrischen Eigenschaften des Markierwerkzeugs dergestalt, daß die Markierung an einer Stelle der Oberfläche gesetzt wird, an der der projizierte Lichtstrahl auf die Oberfläche träfe, wenn sich nicht das Markierwerkzeug an der Oberfläche befände.

Insbesondere wenn das Mittel zum Anbringen einer Markierung eine einzelne Schreibspitze umfaßt, ist die Steuerschaltung vorzugsweise ferner eingerichtet, um die Schreibspitze entsprechend einem Ort, wo das lichtempfindliche Element das Lichtsignal erfaßt, zu verschieben, so daß die Schreibspitze die Markierung an die mit dem projizierten Strahl angepeilte Stelle der Oberfläche setzen kann.

Vorzugsweise sind das Mittel zum Anbringen einer Markierung und das lichtempfindliche Element an gegenüberliegenden Seiten eines Rahmens montiert. Dieser Rahmen kann vor der zu markierenden Oberfläche so plaziert werden, daß das Mittel zum Anbringen der Markierung der Oberfläche zugewandt ist und das auf der gegenüberliegenden Seite des Rahmens montierte lichtempfindliche Element der Quelle des projizierten Lichtstrahls zugewandt ist.

Bei vielen Anwendungen, insbesondere beim Übertragen einer Markierung vom Fußboden an die Decke eines Raumes oder beim Projizieren einer horizontalen Linie an die Wand eines Raumes, trifft der projizierte Strahl im wesentlichen senkrecht auf die zu markierende Oberfläche. Unter diesen Bedingung ist eine parallaxenfreie Anbringung der Markierung dann möglich, wenn die Steuereinrichtung das Mittel zum Anbringen einer Markierung derart steuert, daß die Stelle, wo letzteres die Markierung setzt, und der Ort, wo das lichtempfindliche Element das Lichtsignal erfaßt, auf einer zu der Seite des Rahmens, an der das Mittel montiert ist und die an der zu markierenden Oberfläche plaziert wird, senkrechten Linie liegen.

Um das Übertragen einer fortlaufenden Markierung wie etwa einer Linie auf einer Oberfläche zu erleichtern, ist der Rahmen des Markierwerkzeugs zweckmäßigerweise mit Rädern zum Verfahren des Gehäuses auf der zu markierenden Oberfläche versehen. Vorzugsweise hat der Rahmen drei Räder, um auch dann, wenn die Oberfläche rauh ist, eine eindeutige, stabile Position des Markierwerkzeugs an der Oberfläche zu gewährleisten.

Gemäß einer zweckmäßigen Weiterentwicklung ist wenigstens einer dieser Räder lenkbar, zum Beispiel durch eine Person, die das Markierwerkzeug bedient, oder durch die Steuerschaltung in Abhängigkeit von dem Ort, wo das lichtempfindliche Element das Lichtsignal erfaßt, um so eine sich entlang der Oberfläche erstreckende, durch einen projizierten Lichtstrahl definierte Linie schnell und bequem abfahren zu können, ohne daß das lichtempfindliche Element unter dem projizierten Strahl wegwandert.

Für den Einsatz an schwer zugänglichen Stellen ist das Markierwerkzeug vorzugsweise zusätzlich mit einem Ansatz für einen Stiel ausgestattet, mit dessen Hilfe zum Beispiel ein auf dem Fußboden eines Raums stehender Benutzer das Werkzeug gegen die Decke drücken kann.

Weitere Merkmale und Vorteile der Erfindung ergeben sich aus der Beschreibung von Ausführungsbeispielen mit Bezug auf die Figuren.
- Figuren 1 und 2: zeigen schematisch ein erfindungsgemäßes Markierwerkzeug in einer Seitenansicht beziehungsweise einer Draufsicht; und
- Figuren 3 und 4: zeigen das Markierwerkzeug in zwei typischen Anwendungssituationen.

### Beschreibung des Ausführungsbeispiels

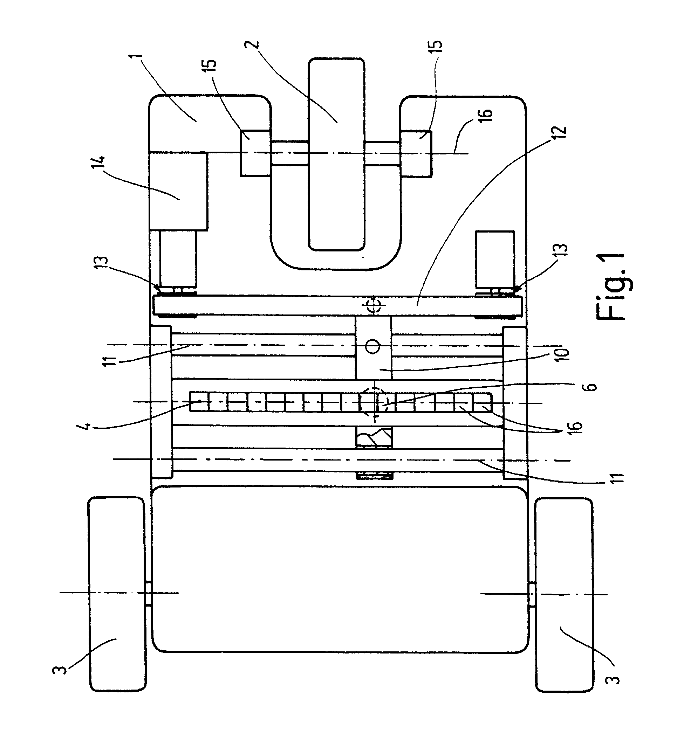

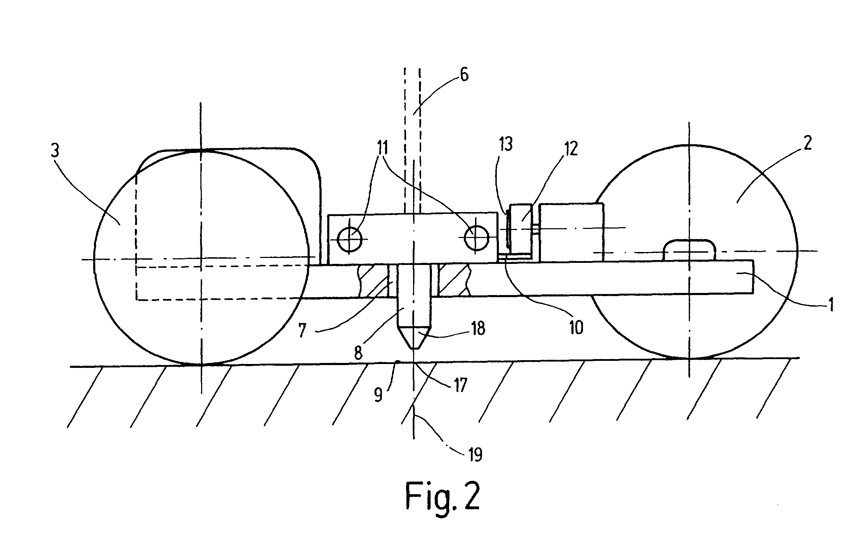

Figuren 1 und 2 zeigen eine Ausgestaltung des erfindungsgemäßen Markierwerkzeugs in Draufsicht beziehungsweise in Seitenansicht. Es umfaßt eine Grundplatte oder einen Rahmen 1 von im wesentlichen rechteckiger Gestalt, mit einem in der Nähe einer Schmalseite des Rechtecks angeordneten ersten Rad 2, nachfolgend auch als Vorderrad bezeichnet, und zwei Rädern 3, auch als Hinterräder bezeichnet, in der Nähe der gegenüberliegenden Schmalseite. Mit Hilfe dieser drei Räder ist das Werkzeug auf einer beliebigen zu markierenden Oberfläche 9 verfahrbar. Ein lichtempfindliches Element 4 in Form einer Photodiodenzeile erstreckt sich im wesentlichen über die gesamte Breite des Rahmens 1 und ist mit einer Steuerschaltung verbunden, die in einem Gehäuse 5 untergebracht ist. Die Steuerschaltung empfängt von jeder einzelnen Photodiode 16 ein für die empfangene Beleuchtungsstärke repräsentatives Signal und ist so in der Lage, zu erkennen, auf welche Photodiode(n) 16 ein projizierter Lichtstrahl 6 auftrifft, der in der Figur 1 als gestrichelter Umriß angedeutet ist. Dieser Lichtstrahl, vorzugsweise ein Laserstrahl, ist auf einen Punkt auf einer Oberfläche gerichtet, der von dem Markierwerkzeug mit einer Farbmarkierung versehen werden soll.

Wie insbesondere in Figur 2 zu sehen, erstreckt sich unterhalb des lichtempfindlichen Elements 4 über dessen gesamte Länge ein Schlitz 7 im Rahmen 1, durch den sich eine' Schreibspitze 8 bis in die Nähe der zu markierenden Oberfläche 9 erstreckt. Die Schreibspitze 8 umfaßt eine Düse 18, die durch die Steuerschaltung betätigbar ist, um Tinte oder eine pulverförmige Farbe auszustoßen.

Die Schreibspitze 8 ist an einem Träger 10 montiert, der an zwei Schienen 11 geführt entlang des Schlitzes 7, das heißt quer zur Bewegungsrichtung des Markierwerkzeugs auf der Oberfläche 9, verschiebbar ist.

Der Träger ist an einem endlosen Treibriemen 12 befestigt, der auf zwei Rollen 13 an gegenüberliegenden Seiten des Rahmens 1 geführt ist. Eine der Rollen 13 ist durch einen Motor 14 antreibbar.

Wenn die Steuerschaltung den Ort erfaßt hat, an dem der Lichtstrahl 6 auf die Diodenzeile trifft, steuert sie den Motor 14, um den Träger 10 in eine Position zu bewegen, in der die Schreibspitze bei Betrachtung senkrecht von oben wie in Figur 1 exakt unterhalb des Auftreffpunkts des Lichtstrahls 6 auf die Diodenzeile liegt. Mit anderen Worten: die Schreibspitze 8 und der Ort, an dem der Strahl 6 auf das lichtempfindliche Element 4 trifft, liegen auf einer Linie 19, die auf der Oberfläche 9 beziehungsweise der dieser Oberfläche 9 zugewandten Unterseite des Markiergeräts senkrecht steht. Sobald diese Position erreicht ist, wird die Schreibspitze 8 angesteuert, um Farbe auf die Oberfläche 9 an einer Stelle 17 zu spritzen, wo die Linie 19 die Oberfläche 9 schneidet.

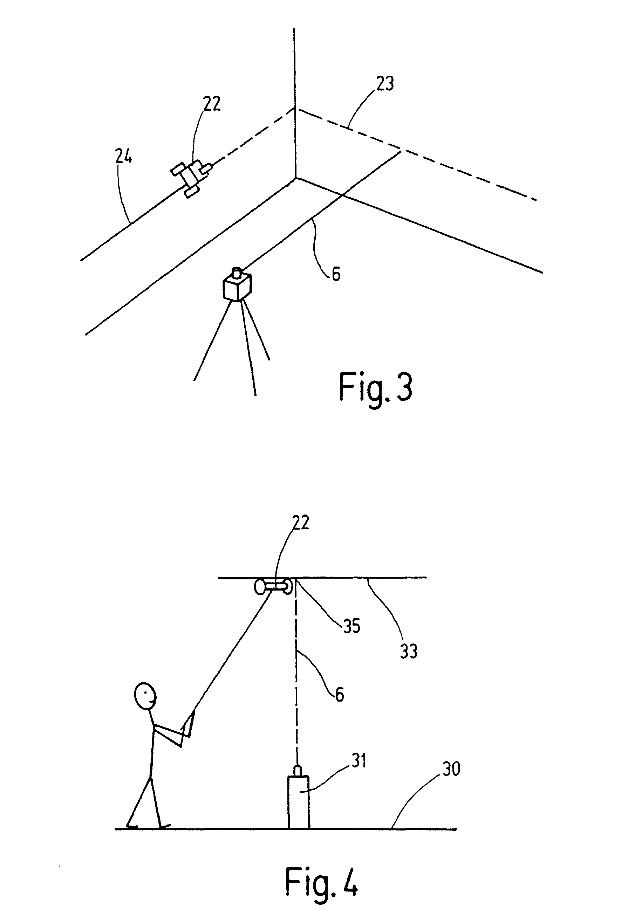

Figur 3 zeigt eine erste typische Anwendung des erfindungsgemäßen Markiergeräts. Ein Nivellierlaser 20 sendet mit Hilfe eines Drehspiegels einen rotierenden Laserstrahl 6 aus, der horizontal ausgerichtet ist und über die Wände eines Raumes streicht. Eine (nicht dargestellte) Bedienungsperson führt das erfindungsgemäße Markiergerät 22 entlang der von dem Laserstrahl 6 auf der Wand aufgezeichneten Lichtspur 23. Dabei setzt das Markiergerät 22 jedes Mal, wenn sein lichtempfindliches Element von dem rotierenden Laserstrahl 6 getroffen wird, eine Farbmarkierung auf die Wand. Auf diese Weise entsteht eine Folge von Markierungen, die in der Figur als durchgezogene Linie 24 dargestellt ist. Da der Laserstrahl 21 exakt horizontal verläuft, setzt das Markiergerät auch dann, wenn es - von oben betrachtet - nicht exakt senkrecht von dem Laserstrahl getroffen wird, die Markierung in der richtigen Höhe.

Figur 4 zeigt eine zweite typische Anwendung des Markiergeräts. Nachdem auf einem Fußboden 30 eines Raums ein Referenzpunkt vermessen worden ist, wird über diesem Punkt ein Laser 31 aufgestellt, der einen exakt vertikal ausgerichteten Strahl 6 abgibt, um den Referenzpunkt an die Decke 33 des Raums zu übertragen. Ein Benutzer drückt das Markiergerät 22 gegen die Decke 33 mit Hilfe eines Stiels 34, der an einem (in Figur 1 und 2 nicht dargestellten) Ansatz des Rahmens 1 befestigt ist. Der Stiel 34 ist zweckmäßigerweise teleskopartig ausziehbar, um eine leichte Handhabung des Markiergeräts auch bei unterschiedlichen Raumhöhen zu gewährleisten.

Da es mit Hilfe des langen Stiels 34 schwierig sein kann, das Markiergerät 22 an der Decke an den zu markierenden Auftreffpunkt 35 des Strahls 6 zu manövrieren, kann es bei dieser Anwendung zweckmäßig sein, wenn das Vorderrad 2 beispielsweise mit Hilfe eines durch den Stiel 34 geführten Seilzugs durch den Benutzer steuerbar ist.

In dem Fall, daß mit dem Markiergerät an der Decke eine langgezogene Spur ähnlich der Spur 23 in Figur 3 verfolgt werden soll, kann es überdies zweckmäßig sein, Mittel zum Steuern des Vorderrads 2 durch die Steuerschaltung vorzusehen, zum Beispiel in Form kleiner Stellzylinder, die in der Lage sind, am Rahmen 1 montierte Lager 15 des Vorderrads 2 (siehe Figur 1) zu verschieben, um so die Achse 16 des Vorderrads zu drehen. Auf diese Weise kann die Steuerschaltung gegenregeln, wenn sie erkennt, daß der Lichtstrahl 6 in einen Randbereich des lichtempfindlichen Elements 4 abwandert, das Markierwerkzeug also den von dem Strahl überstrichenen Bereich zu verlassen droht.

Zahlreiche Abwandlungen des Erfindungsprinzips sind möglich. So kann zum Beispiel der Treibriemen 12 ohne weiteres durch eine sich quer über den Rahmen 1 erstreckende Schnecke ersetzt werden, die drehangetrieben wird, um den auf der Schnecke reitenden Träger zu verschieben.

Die Erfindung ist aber auch nicht auf die Verwendung einer einzigen, zu verschiebenden Schreibspitze beschränkt. Es ist auch möglich, stattdessen eine Vielzahl von Schreibspitzen orstfest unter dem lichtempfindlichen Element 4 zu montieren, wobei zum Beispiel jeder einzelnen Phododiode des lichtempfindlichen Elements eine Schreibspitze zugeordnet sein kann. Je nachdem, auf welcher Photodiode die Steuerschaltung den Strahl 6 registriert, wird dann die dieser Photodiode zugeordnete Schreibspitze betätigt, um die Markierung zu setzen. Dabei ermöglicht der Fortfall der mechanischen Bewegung der Schreibspitze eine Erhöhung der Reaktionsgeschwindigkeit des Markierwerkzeugs.

## Patentansprüche

1. Markierwerkzeug mit einem Mittel zum Anbringen einer Markierung an einer Oberfläche (9), **dadurch gekennzeichnet,** daß das Mittel mit einem lichtempfindlichen Element (4) zu einer Einheit verbunden ist und das Markierwerkzeug (22) eine Steuereinrichtung umfaßt, die mit dem lichtempfindlichen Element (4) und dem Mittel zum Anbringen einer Markierung in funktioneller Beziehung steht, um letzteres zu betätigen, wenn das lichtempfindliche Element (4) einen Lichtstrahl (6) erfaßt.

2. Markierwerkzeug nach Anspruch 1, **dadurch gekennzeichnet,** daß das Mittel zum Anbringen einer Markierung wenigstens eine Schreibspitze (8) umfaßt.

3. Markierwerkzeug nach Anspruch 2, **dadurch gekennzeichnet,** daß die Schreibspitze (8) durch eine Düse (18) zum Abgeben von Farbpulver oder Tinte gebildet ist.

4. Markierwerkzeug nach einem der vorhergehenden Ansprüche, **dadurch gekennzeichnet,** daß das lichtempfindliche Element (4) eine ortsauflösende Anordnung von einzelnen Lichtsensoren umfaßt, und daß die Steuerschaltung eingerichtet ist, die Schreibspitze (8) so zu verschieben, daß sie die Markierung an einer Stelle (17) entsprechend einem Ort, wo das lichtempfindliche Element (4) den Lichtstrahl (6) erfaßt, setzt.

5. Markierwerkzeug nach einem der vorhergehenden Ansprüche, **dadurch gekennzeichnet,** daß das lichtempfindliche Element (4) eine Zeilenanordnung von einzelnen Lichtsensoren umfaßt, und daß die Steuerschaltung eingerichtet ist, das Mittel zum Anbringen einer Markierung in Richtung der Zeilenanordnung so zu verschieben, daß es die Markierung an einer Stelle (17) entsprechend einem Ort, wo das lichtempfindliche Element (4) das Lichtsignal (6) erfaßt, setzt.

6. Markierwerkzeug nach einem der vorhergehenden Ansprüche, **dadurch gekennzeichnet,** daß es einen Rahmen (1) umfaßt, wobei das Mittel zum Anbringen einer Markierung und das lichtempfindliche Element (4) an gegenüberliegenden Seiten des Rahmens montiert sind.

7. Markierwerkzeug nach Anspruch 6 und einem der Ansprüche 4 und 5, **dadurch gekennzeichnet,** daß der Ort, wo das lichtempfindliche Element (4) den Lichtstrahl (6) erfaßt, und die Stelle (17), wo das Mittel zum Anbringen einer Markierung die Markierung setzt, auf einer zu der Seite des Rahmens (1), an der das Mittel montiert ist, senkrechten Linie (19) liegen.

8. Markierwerkzeug nach Anspruch 6 oder 7, **dadurch gekennzeichnet,** daß der Rahmen (1) Räder (2,3) zum Verfahren des Gehäuses auf einer zu markierenden Oberfläche (9) aufweist.

9. Markierwerkzeug nach Anspruch 8, **dadurch gekennzeichnet,** daß es drei Räder (2,3) hat.

10. Markierwerkzeug nach Anspruch 8 oder 9, **dadurch gekennzeichnet,** daß wenigstens eines der Räder (2) lenkbar ist.

11. Markierwerkzeug nach einem der Ansprüche 6 bis 10, **dadurch gekennzeichnet,** daß der Rahmen (1) einen Ansatz für einen Stiel (34) aufweist.

12. Markierwerkzeug nach einem der Ansprüche 6 bis 10, **dadurch gekennzeichnet,** daß es einen Stiel (34) besitzt.
